# EUROPEAN PATENT APPLICATION

(11) **EP 4 425 870 A1**
(43) Date of publication of application: **04.09.2024**
(21) Application number: 22951597.8
(22) Date of filing: 22.07.2022
(51) Int. Cl.: H04L 41/5022

(54) **PACKET TRANSMISSION**

(71) Applicant: New H3C Technologies Co., Ltd., Hangzhou, Zhejiang 310052 (CN)
(72) Inventor: CHENG, Zuopin, Beijing 100102 (CN)
(74) Representative: IPAZ
(86) International application number: PCT/CN2022/107433
(87) International publication number: WO 2024/016327

(57) **Abstract**

The present disclosure provides packet transmission, which relates to the field of communication technology. The solution of the present disclosure comprises: receiving a first packet from an upstream network device in a first network, caching the first packet into a scheduling queue of a deterministic flow to which the first packet belongs, and sending the packet in the scheduling queue to a downstream network device in a second network according to a scheduling cycle of the scheduling queue. It can realize end-to-end deterministic transmission across different deterministic networks.

## Description

### TECHNICAL FIELD

The present disclosure relates to the field of communication, in particular to packet transmission.

### BACKGROUND

Deterministic network refers to a network that can ensure the deterministic bandwidth, delay, jitter and packet loss rate of services. Deterministic network technology is a new type of quality of service (QoS) guarantee technology.

Deterministic network technology can be used in "smart grid scenario", "telemedicine", "video entertainment" and "industrial remote control" and other scenarios, so as to realize the deterministic transmission of packets, and end-to-end deterministic transmission is also needed in complex scenarios such as multi service, large flow and wide area.

At present, deterministic networks include time sensitive network (TSN) and networks based on cyclic specific queuing and forwarding (CSQF) mechanism. In the real scene, it is required to realize the end-to-end deterministic transmission between different deterministic networks. For example, there are TSN network and network using CSQF mechanism between device A and device B, it is required to realize the deterministic transmission between device A and device B. However, different deterministic networks use different technologies and standards. In the case of spanning different deterministic networks, end-to-end deterministic transmission cannot be guaranteed.

### SUMMARY

The purpose of the examples of the present disclosure is packet transmission to ensure end-to-end deterministic transmission when spanning different deterministic networks. The specific technical solution is as follows.

In a first aspect, an example of the present disclosure provides a method for packet transmission, which is applied to a gateway. The method comprises:
receiving a first packet from an upstream network device in the first network;
caching the first packet into a scheduling queue of a deterministic flow to which the first packet belongs;
sending the packet in the scheduling queue to a downstream network device in a second network according to a scheduling cycle of the scheduling queue.

In a possible implementation, caching the first packet into the scheduling queue of the deterministic flow to which the first packet belongs, comprises:
matching the first packet with a local flow table;
caching, if there is a first flow table matching the first packet locally, the first packet into a scheduling queue corresponding to the first flow table;
creating a second flow table based on a preset flow characteristic information if there is no flow table matching the first packet locally and the first packet matches the preset flow characteristic information, wherein the second flow table is used to instruct the gateway to cache a packet matching the preset flow characteristic information into a scheduling queue corresponding to the second flow table;
caching the first packet into the scheduling queue corresponding to the second flow table.

In a possible implementation, the first flow table and the second flow table have a preset aging duration.

In a possible implementation, receiving the first packet from the upstream network device in the first network, comprises:
receiving the first packet from the upstream network device in the first network through a plurality of entrances.

In a possible implementation, the preset flow characteristic information is a packet quintuple; or, the preset flow characteristic information is a flow identification of the deterministic flow to which the packet belongs.

In a second aspect, an example of the present disclosure provides an apparatus for packet transmission, which is applied to a gateway. The apparatus comprises:
a receiving module, to receive a first packet from an upstream network device in a first network;
a caching module, to cache the first packet into a scheduling queue of a deterministic flow to which the first packet belongs;
a sending module, to send the packet in the scheduling queue to a downstream network device in a second network according to a scheduling cycle of the scheduling queue.

In a possible implementation, the caching module is specifically to:
match the first packet with a local flow table;
cache, if there is a first flow table matching the first packet locally, the first packet into a scheduling queue corresponding to the first flow table;
create a second flow table based on a preset flow characteristic information if there is no flow table matching the first packet locally and the first packet matches the preset flow characteristic information, wherein the second flow table is used to instruct the gateway to cache a packet matching the preset flow characteristic information into a scheduling queue corresponding to the second flow table;
cache the first packet into the scheduling queue corresponding to the second flow table.

In a possible implementation, the first flow table and the second flow table have a preset aging duration.

In a possible implementation, the receiving module is specifically to:
receive the first packet from the upstream network device in the first network through a plurality of entrances.

In a possible implementation, the preset flow characteristic information is a packet quintuple; or, the preset flow characteristic information is a flow identification of the deterministic flow to which the packet belongs.

In the third aspect, an example of the present disclosure provides a gateway. The gateway comprises:
a processor;
a transceiver;
a machine readable storage medium, which stores machine executable instructions executable by the processor; wherein the machine executable instructions cause the processor to perform the following operations:
receiving a first packet from an upstream network device in a first network through the transceiver;
caching the first packet into a scheduling queue of a deterministic flow to which the first packet belongs;
sending the packet in the scheduling queue to a downstream network device in a second network through the transceiver according to a scheduling cycle of the scheduling queue.

In a possible implementation, the machine executable instructions further cause the processor to perform the following operations:
matching the first packet with a local flow table;
caching, if there is a first flow table matching the first packet locally, the first packet into a scheduling queue corresponding to the first flow table;
creating a second flow table based on a preset flow characteristic information if there is no flow table matching the first packet locally and the first packet matches the preset flow characteristic information, wherein the second flow table is used to instruct the gateway to cache a packet matching the preset flow characteristic information into a scheduling queue corresponding to the second flow table;
caching the first packet into the scheduling queue corresponding to the second flow table.

In a possible implementation, the first flow table and the second flow table have a preset aging duration.

In a possible implementation, the machine executable instructions further cause the processor to perform the following operations:
receiving the first packet from the upstream network device in the first network through a plurality of entrances through the transceiver.

In a possible implementation, the preset flow characteristic information is a packet quintuple; or, the preset flow characteristic information is a flow identification of the deterministic flow to which the packet belongs.

In a fourth aspect, an example of the present disclosure provides a machine-readable storage medium stores machine executable instructions, which when called and executed by a processor, cause the processor to perform the method described in the first aspect.

In a fifth aspect, an example of the present disclosure provides a computer program product, wherein the computer program product causes a processor to perform the method described in the first aspect.

By adopting the above technical solution, after receiving the first packet from the upstream gateway device in the first network, the gateway can cache the first packet into the scheduling queue of the deterministic flow to which the first packet belongs, so that the packets belonging to the same deterministic flow can be cached into the same scheduling queue, and it can be avoided that the packets received by the gateway in one scheduling cycle is switched to two different scheduling cycles of the exit due to the inconsistent scheduling cycles of the gateway's entrance and exit. Further, it is possible to send packets belonging to the same deterministic flow to the downstream network device in the second network in the same scheduling cycle, and ensure end-to-end deterministic transmission even in the case of spanning different deterministic networks.

It should be understood that any product or method for implementing the examples of the present disclosure does not necessarily require all of the advantages described above.

### BRIEF DESCRIPTION OF DRAWINGS

In order to more clearly describe the technical solution of the examples of the present disclosure and the prior art, drawings needed in the examples and the prior art will be briefly described below. Obviously, the drawings described below are for only some examples of the present disclosure, one of ordinary skills in the art can also obtain other drawings based on the drawings illustrated herein without any creative efforts.
Fig. 1 is an exemplary schematic diagram of a TAS scheduling method;
Fig. 2 is a schematic diagram of packet forwarding based on CSQF mechanism;
Fig. 3 is a schematic diagram of multi queue cyclic scheduling of CSQF mechanism provided by an example of the present disclosure;
Fig. 4 is a schematic diagram of a scenario that spans multiple deterministic networks provided by an example of the present disclosure;
Fig. 5 is an exemplary schematic diagram of a scheduling shaping mechanism provided by an example of the present disclosure;
Fig. 6 is an exemplary schematic diagram of the network interface model provided by an example of the present disclosure;
Fig. 7a is an exemplary schematic diagram of the internal resources of the port provided by an example of the present disclosure;
Fig. 7b is an exemplary schematic diagram of the port internal resources of the gateway provided by an example of the present disclosure;
Fig. 7c is another exemplary schematic diagram of the port internal resources of the gateway provided by another example of the present disclosure;
Fig. 8 is a flowchart of a method for packet transmission according to an example of the present disclosure;
Fig. 9 is a flowchart of a method for packet transmission according to another example of the present disclosure;
FIG. 10 is a structural diagram of an apparatus for packet transmission provided by an example of the present disclosure;
FIG. 11 is a structural diagram of a gateway provided by an example of the present disclosure.

### DETAILED DESCRIPTION

In order to make objectives, technical solutions and advantages of the present disclosure more apparent, the present disclosure now will be described in detail with reference to the accompanying drawings and by way of examples. Obviously, the examples described herein are only some of the examples of the present disclosure instead of all of them. All other examples obtained by those of ordinary skills in the art based on the examples herein without any creative efforts are within the scope of the present disclosure.

For ease of understanding, first of all, the relevant concepts involved in the examples of the present disclosure are explained.

Traditional Internet and industrial networks can guarantee QoS service quality through the following four ways of:
1. expanding the network capacity, that is, expanding the bandwidth of the network port, so that the network is in a light load state. At present, Ethernet can realize 400G bandwidth in a single port.
2. traffic shaping: performing speed limit to specific ports or traffic through token bucket, credit shaping and so on. For example, if the exit end bandwidth of upstream network device is 8Gbps and the excess bandwidth of downstream network device is only 2 Gbps, the transmission bandwidth of upstream network device is limited to less than 2Gbps to avoid congestion of downstream network device.
3. queue scheduling: queue scheduling refers to scheduling traffic at the exit end of the switching device. First, the packets are marked with different priorities, then the packets are added to the corresponding priority queue, and finally different queue scheduling algorithms are used to process the packets in the queue. For example, strict priority (SP) algorithm is used to schedule the packets according to the order of queue priority. For another example, the weighted round robin (WRR) algorithm is used to assign a weight for each queue, and the packets in each queue are forwarded in turn according to the proportion of the weight, so as to avoid the long-term waiting of low priority packets.
4. congestion control: when the traffic is too much, the buffer queue space is insufficient, and the network suffers from congestion and packet loss, congestion control is required. Explicit congestion notification (ECN) or data center transmission control protocol (DCTCP) and other explicit congestion markers based methods can be used to detect congestion, or timely, swift and other round-trip time (RTT) based methods can be used to detect congestion, so that upstream network devices and sending end devices can reduce the sending rate.

However, the above solution to ensure QoS technology has two core problems: it is difficult to guarantee bounded delay jitter, and it is difficult to deal with multicast and burst traffic.

Among them, it is difficult to guarantee bounded delay jitter refers to that network devices forward packets by multiplexing the bandwidth resources at exit end, which lacks QoS guarantee mechanism of time delay dimension. When network devices forward packets by using the best-effort forwarding strategy, there will be queuing and congestion. The service delay is in the order of 50ms-1s, and there is a long tail delay, so that it is difficult to control the delay jitter within a certain range.

It is difficult to deal with multicast and burst traffic refers to that due to the uncontrollable size of the traffic at the sending end and also the uncontrollable time of sending packets, there are many flows converging in the downstream network device (incast, i.e. multicast) and the phenomenon of traffic surge (burst) at a certain time in the network, resulting in network congestion and packet loss.

In order to solve the above two core problems, the concept of time division multiplexing (TDM) is introduced in technology. Through clock synchronization and time slot planning, the whole network schedules and forwards packets according to a unified beat, so as to achieve a certain delay and jitter. For example, TSN network utilizes TDM technology.

Among them, the time slot refers to dividing time into multiple time slots in an equal way, wherein the time slot is the smallest scheduling unit in TSN.

Clock synchronization refers to the clock synchronization of the whole network. That is, the clocks of terminal device and switching device are the same, and the network card also needs to stamp the packet with a time stamp. At present, there are two ways of clock synchronization. One is the master-slave mode, the most accurate clock is selected as the master clock, and the other slave clocks are subject to the master clock. The other is the voting mode. For example, there are 9 devices in a domain, the clocks of 5 devices are 1:00, and the clocks of 4 devices are 1:01. Based on the principle that the minority obeys the majority, the clocks of devices in the domain are adjusted to 1:00.

Time slot planning refers to dividing time into multiple time slots in an equal way. The time slots generally refer to the transmission resources of the time dimension of the exit end of the switching device. For example, the exit end bandwidth of a switching device is 1 Gbps, that is, 1G bits can be transmitted in 1s. Assuming that a packet has 1500 bytes, that is, 12000 bits, the transmission of this packet occupies a 12 microseconds (us) of certain section of time slot resources of the exit end. Which section of time slot resources is occupied is determined by the transmission start time of the packet. Since most industrial flows are periodic packets smaller than the Maximum Transmission Unit (MTU), the start time of sending packets by the terminal can be controlled. Through global slot planning (time division multiplexing), each packet can be "triggered" at the time of advance planning, so as to ensure that the time slots occupied by each packet during transmission at the exit end of each hop of network device do not conflict with each other, so that the generation of multicast and burst is avoided and the "punctual and accurate" transmission is realized.

At present, the deterministic network can be realized through TSN or CSQF mechanism.

Among them, TSN is a group of Ethernet standards. Through core technologies such as precise time synchronization and timing scheduling, it realizes the low delay flow service of time synchronization, and provides low delay isochronous standard data for each unit in the system, so as to provide the basis for the integration of control, measurement, configuration, user interface (UI) and file exchange infrastructure.

TSN can use time-aware shaper (TAS) mechanism for queue scheduling. TAS mechanism uses the priority gated queue to add a gating switch to the priority queue, and controls the opening and closing of the gating switch through the gating schedule, so as to control the delay jitter within a certain range.

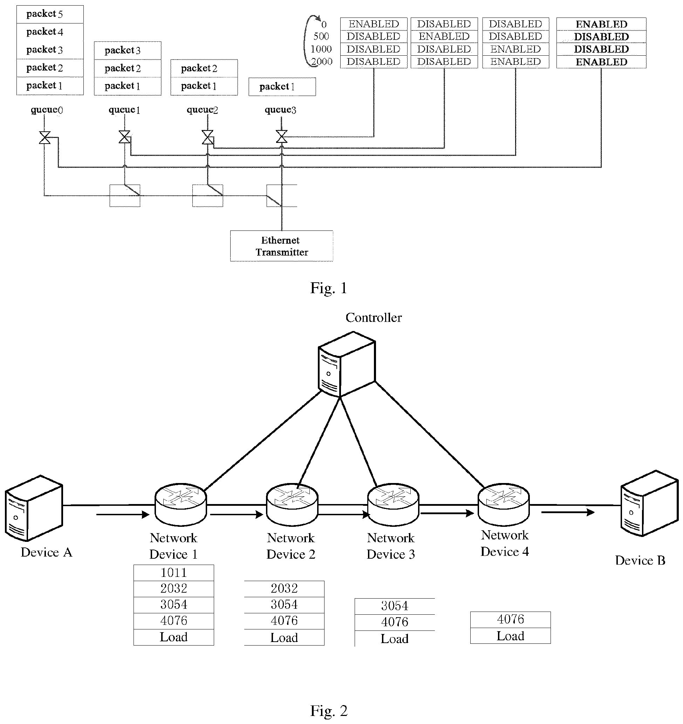

As shown in Fig. 1, it shows four queues and Ethernet transmitter, wherein queue 0 comprises five packets, queue 1 comprises three packets, queue 2 comprises two packets, queue 3 comprises one packet, and Ethernet transmitter is used to transmit packets in the four queues.

Each queue has a gating switch. The gating switch of queue 0 is enabled in slot 0 and slot 2000, and disabled in slot 500 and slot 1000, that is, the packets in queue 0 are transmitted in slot 0 and slot 2000.

Likewise, it can be seen from Fig. 1 that the gating switch of queue 1 is enabled in time slot 1000 and time slot 2000; the gating switch of queue 2 is enabled in time slot 500; and the gating switch of queue 3 is enabled in slot 0.

CSQF mechanism is a cyclic queuing and forwarding mechanism based on segmented routing. The controller assigns segmented identification (SID) for each network device, and specifies the exit end and forwarding cycle corresponding to the SID. After receiving the packet, the network device analyzes the packet header, and obtains the exit end and specific forwarding time period (cycle) information through the SID tag on the top of the stack. Then, the network device forwards the packet through the exit end according to the forwarding cycle.

As shown in Fig. 2, it is a schematic diagram of packet forwarding based on CSQF mechanism. The controller can assign a SID to each network device. After receiving the packet sent by device A, network device 1 adds SID tag to the packet. The load part in Fig. 2 is the packet sent by device A, and the 1011, 2032, 3054 and 4076 in the outer load layer are SID tags. Network device 1 can determine the forwarding port and forwarding cycle based on the SID tag (1011) on the top of the stack, and forward the packet to network device 2 according to the forwarding port and forwarding cycle. Among them, the first bit of the SID tag indicates the number of hops, the third bit indicates the exit end, and the fourth bit indicates the forwarding cycle. For example, the 1011 indicates that the packet is transmitted in cycle 1 of port 1 of network device 1.

After receiving the packet, network device 2 determines the forwarding port and forwarding cycle based on the SID tag (2032) on the top of the stack, and forwards the packet to network device 3 according to the forwarding port and forwarding cycle. Network device 3 and network device 4 also forward the packet based on the same method until the packet is forwarded to device B.

CSQF is a multi-cycle multi-queue cyclic scheduling mechanism, which realizes end-to-end deterministic delay and jitter by keeping the frequency synchronization between network devices and making the exit end queue of network devices queue and forward circularly.

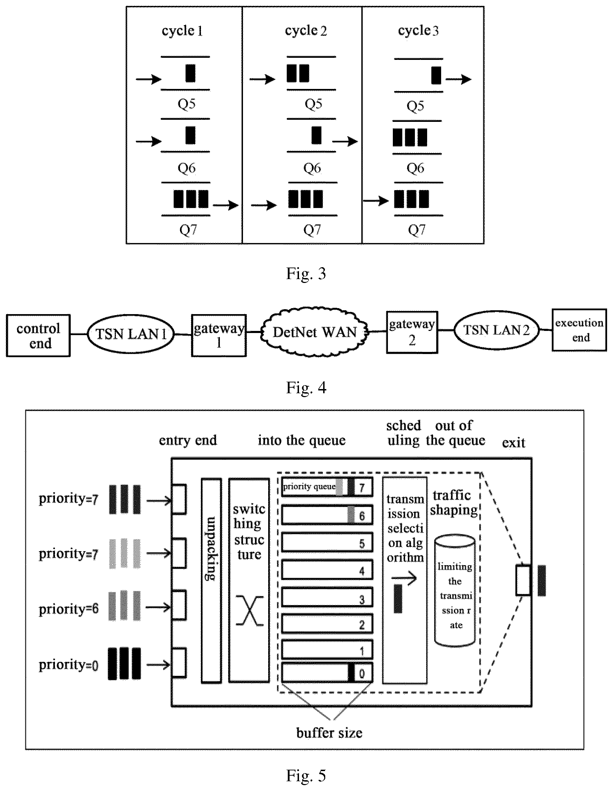

As shown in Fig. 3, it is a schematic diagram of multi queue cyclic scheduling of CSQF mechanism. The cycle 1-cycle 3 is schematically shown in Fig. 3. The packet in queue 7 (Q7) is sent in cycle 1, the packet in queue 6 (Q6) is sent in cycle 2, and the packet in queue 5 (Q5) is sent in cycle 3.

By comparison, it can be seen that the TAS mechanism used by TSN is based on the gating mode, which turns on and off the gating switch repeatedly, so as to control the sending of packets in the queue. CSQF mechanism controls the sending of packets in the queue by means of multi queue cyclic scheduling. Both of them adopt queue and cyclic scheduling. The differences are in that:
1. in TAS mechanism, network devices can turn on the gating switches of multiple queues at the same time, while in CSQF mechanism, only the packet in one queue is sent in one cycle.
2. the duration of each cycle of gating switch of TAS mechanism is different from that of CSQF mechanism.
3. TAS mechanism and CSQF mechanism are both for port scheduling, but different ports have different rates.
4. TAS mechanism considers both frequency and phase difference, and CSQF mechanism only requires frequency synchronization.
5. in TAS mechanism, in the same scheduling cycle, the network device sends the packets in each queue in each queue from high priority to low priority in the same scheduling cycle for the queue with the gating switch turned on; while in CSQF mechanism, there is no priority concept in the same scheduling cycle, and the network device sends in turn the packets cached in the queue corresponding to the current scheduling cycle.

Different deterministic networks also have the same constraint. Taking TSN with TAS mechanism as an example, in the same scheduling cycle, the space occupied by packets in the queue with the gated switch turned on cannot exceed the maximum sending capacity of the scheduling cycle. In the deterministic network with CSQF mechanism, the space occupied by packets in any queue in the same scheduling cycle cannot exceed the maximum sending capacity of the scheduling cycle. Otherwise, there will be the problem that the queue cannot be emptied within the scheduling cycle, that is, the packets in the queue cannot be sent within the specified scheduling cycle, which will affect the delay and jitter of the service flow.

Although both TAS mechanism and CSQF mechanism can realize the end-to-end deterministic transmission of the same deterministic network, in the actual scenario, end-to-end deterministic transmission needs to be realized between different deterministic networks. For example, as shown in Fig. 4, there are different deterministic networks between the control end and the execution end, and different deterministic networks are connected through gateways. Among them, the control end, TSN LAN 1, gateway 1, deterministic Networking (DetNet) WAN, gateway 2, TSN LAN 2 and the execution end are connected in turn. TSN LAN 1 and TSN LAN 2 both use TAS mechanism, and DetNet WAN uses CSQF mechanism. Due to the above differences between TAS mechanism and CSQF mechanism, deterministic transmission can only be realized in a single deterministic network, and end-to-end deterministic transmission from control end to execution end cannot be ensured.

Both TAS mechanism and CSQF mechanism use scheduling and shaping mechanism, which is the service quality assurance mechanism of network device. Among them, scheduling refers to queue scheduling, comprising packet entering the queue, selecting the sending queue according to the scheduling algorithm, and outgoing transmission of packets. Shaping refers to traffic shaping, which prevents congestion in the interior of network devices or the next hop of network devices by limiting the forwarding rate of ports.

As shown in Fig. 5, it is an exemplary schematic diagram of a scheduling shaping mechanism. The network device can receive packets of various priorities through the entrance, and perform unpacking processing and switching structure processing on the packets, wherein switching structure processing refers to modifying the header of the packet according to the configuration of the network device. Then, the network device can add the packet into the priority queue, and use the transmission selection algorithm (such as TAS algorithm) to select the queue sent in the current cycle during scheduling. Then, when processing the packets in the selected queue out of the queue, the network device uses the method of traffic shaping (such as limiting the transmission rate) to send the packets in the queue through the exit end.

In the example of the present disclosure, the gateway can also adopt the scheduling shaping mechanism to map and shape the deterministic flow, so as to realize the packet transmission between different deterministic networks.

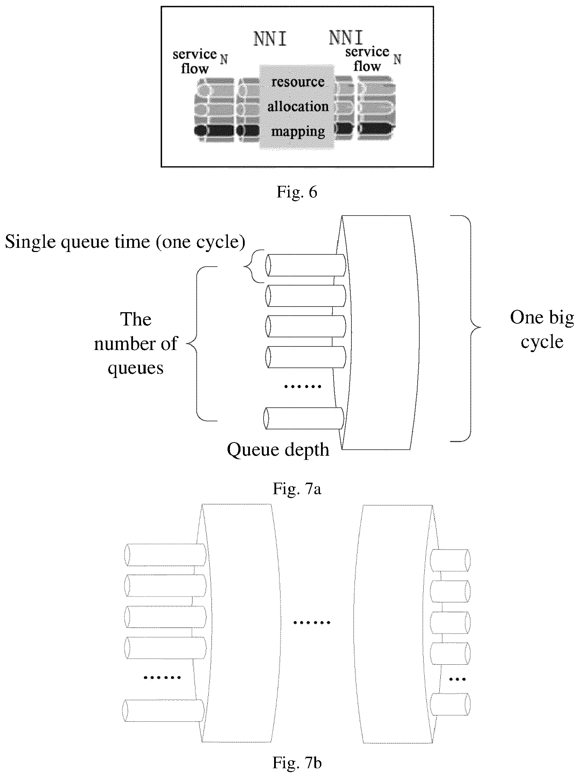

The network interface model of the gateway in the example of the present disclosure is shown in Fig. 6. There are multiple network to network interface (NNI) ports on both sides of the gateway, and each port carries multiple service flows.

As shown in Fig. 7a, it is an exemplary schematic diagram of the internal resources of the port. In Fig. 7a, each small cylinder represents a scheduling queue, the length of the small cylinder represents the queue depth, and the scheduling queue is used to cache packets. A large scheduling cycle is composed of multiple scheduling cycles, and each scheduling cycle is used to transmit packets in a scheduling queue. As an example, each scheduling cycle can be 10 microseconds.

Due to the different device types, port rates and scenarios of respective network device, the resources in different ports will be different according to the different carrying services, such as the different scheduling cycle, queue depth and other parameters of different ports.

For example, as shown in Fig. 7b, the left side of Fig. 7b is the gateway's entry resources, and the right side is the gateway's exit resources. The number of scheduling queues at the left entrance is the same as that at the right exit, and the length of each scheduling cycle is the same, but the depth of the scheduling queue on the left is different from that on the right.

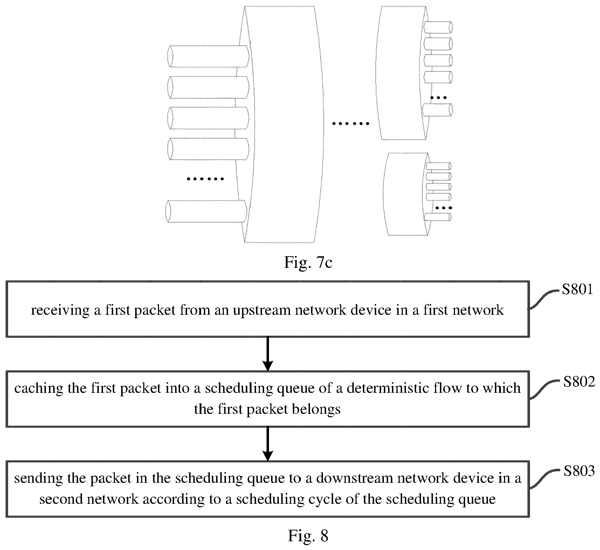

For another example, as shown in Fig. 7c, the left side of Fig. 7c is the gateway's entry resources, and the right side is the gateway's exit resources. The number of scheduling queues, scheduling cycle, and queue depth of the left side entrance are different from those of the right side exit.

Taking Fig. 7b as an example, assume that the entrance of Fig. 7b is connected with TSN LAN 1 and the exit is connected with DetNet LAN, that is, the gateway can receive the traffic sent by TSN LAN 1 through the entrance and send the received traffic to DetNet WAN through the exit.

Although the length of the scheduling cycle of the entrance and exit shown in Fig. 7b is the same, the clocks may be inconsistent, which causes the data originally belonging to the same scheduling cycle being dispersed in two scheduling cycles after the traffic passes through the intermediate transmission link.

For example, the data belonging to the same deterministic flow received by the gateway in a scheduling cycle Q1 of the entrance is converted to two scheduling cycles, which are the second half of Q5 and the first half of Q6, respectively, resulting in the data of the same deterministic flow being dispersed in two scheduling cycles and sent to the DetNet WAN, so that the deterministic transmission of this deterministic flow cannot be realized.

Combined with the above introduction, in order to ensure the deterministic end-to-end transmission, an example of the present disclosure provides a method for packet transmission applied to the gateway, as shown in Fig. 8. The method comprises:
S801. receiving a first packet from an upstream network device in a first network.

Among them, the first network is a deterministic network, for example, it can be a TSN network or a network using CSQF mechanism.

The upstream network device is the network device located upstream of the gateway in the forwarding path.

For example, in Fig. 4, for the forwarding path from the control end to the execution end, the network device in TSN LAN 1 is the upstream network device of gateway 1, and the network device in DetNet WAN is the upstream network device of gateway 2.

For the forwarding path from the execution end to the control end, the network device in the DetNet WAN is the upstream network device of gateway 1, and the network device in the TSN LAN 2 is the upstream network device of gateway 2.

S802. caching the first packet into a scheduling queue of a deterministic flow to which the first packet belongs;

Among them, the scheduling queue is the scheduling queue of the gateway's exit.

S803. sending the packet in the scheduling queue to a downstream network device in a second network according to a scheduling cycle of the scheduling queue.

Among them, the second network is a deterministic network, for example, it can be a TSN network or a network using CSQF mechanism.

The first network and the second network are different deterministic networks, that is, the first network and the second network use different scheduling mechanisms.

In the example of the present disclosure, the network composed of a plurality of different deterministic networks can be called a heterogeneous network. For example, the first network, a gateway and the second network can form a heterogeneous network, and the network from the control end to the execution end shown in Fig. 4 is also a heterogeneous network.

The downstream network device is a network device located downstream of the gateway in the forwarding path. In other words, the upstream network device and the downstream network device in the example of the present disclosure are distinguished for the gateway.

For example, in Fig. 4, for the forwarding path from the control end to the execution end, the downstream network device of gateway 1 is the network device in the DetNet WAN, and the downstream network device of gateway 2 is the network device in the TSN LAN 2.

For the forwarding path from the execution end to the control end, the downstream network device of gateway 1 is the network device in TSN LAN 1, and the downstream network device of gateway 2 is the network device in DetNet WAN.

In an example, the gateway can determine the forwarding path of the packet according to the destination address of the packet, and send the packet in the scheduling queue to the downstream network device in the second network along the forwarding path. The method for determining the packet forwarding path is related to the protocol used by the packet, and the packet forwarding path can be determined based on the protocol, which is not limited by the example of the present disclosure.

By adopting the above method, after receiving the first packet from the upstream gateway device in the first network, the gateway can cache the first packet into the scheduling queue of the flow to which the first packet belongs, so that the packets belonging to the same deterministic flow can be cached into the same scheduling queue, and it can be avoided that the packets received by the gateway in one scheduling cycle is switched to two different scheduling cycles of the exit due to the inconsistent scheduling cycles of the gateway's entrance and exit. Further, it is possible to send packets belonging to the same deterministic flow to the downstream network device in the second network in the same scheduling cycle, which can ensure end-to-end deterministic transmission in the case of spanning different deterministic networks.

In an example, the gateway can have multiple entrances, which can be physical ports or virtual interfaces, such as virtual extensible local area network (VxLAN) interfaces. At above S801, the gateway can receive the first packet from the upstream network device in the first network through a plurality of entrances. In this way, packets belonging to the same deterministic flow received by multiple entrances can be cached to the same scheduling queue, which can ensure the end-to-end deterministic transmission of packets of the same deterministic flow received from different entrances.

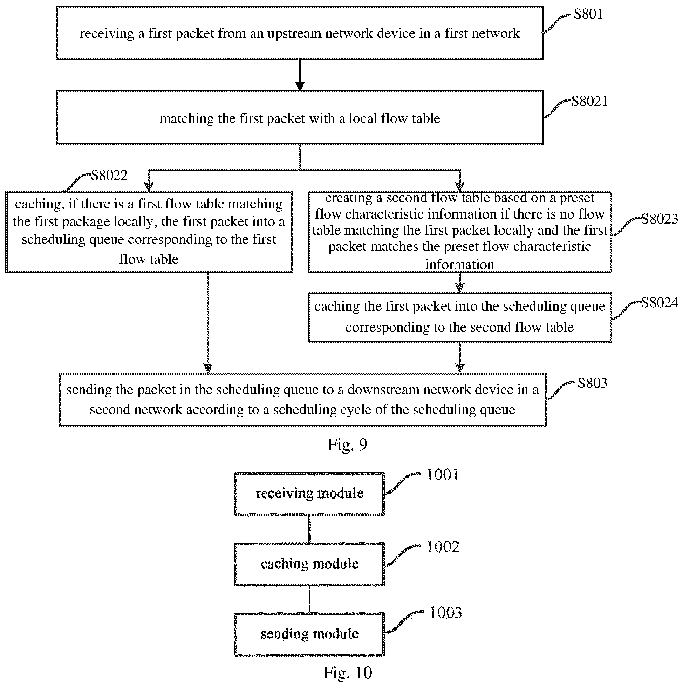

In the example of the present disclosure, the gateway can cache the received packet to the scheduling queue by matching the flow table, as shown in Fig. 9. On the basis of Fig. 8, S802, caching the first packet to the scheduling queue of the deterministic flow to which the first packet belongs, which can be realized as follows:
S8021. matching the first packet with a local flow table.

Among them, each local flow table corresponds to a scheduling queue, that is, each flow table is associated with a scheduling queue respectively. The flow table comprises matching fields and action items. The matching fields of the flow table can be flow characteristic information, and the action items are to add the matched packets to the scheduling queue corresponding to the flow table.

The flow characteristic information in the example of the present disclosure can be packet quintuple, or the flow identification (flow ID) of the deterministic flow to which the packet belongs, or other information used to identify a deterministic flow, which is not limited in the example of the present disclosure.

S8022. caching, if there is a first flow table matching the first packet locally, the first packet into a scheduling queue corresponding to the first flow table.

If the first packet matches the flow characteristic information in the first flow table, the first packet can be cached in the scheduling queue corresponding to the first flow table. In this way, the packets belonging to the same deterministic flow can be cached in the same scheduling queue.

S8023. creating a second flow table based on a preset flow characteristic information if there is no flow table matching the first packet locally and the first packet matches the preset flow characteristic information.

Among them, the second flow table is used to instruct the gateway to cache a packet matching the preset flow characteristics into a scheduling queue corresponding to the second flow table.

The gateway can pre-configure the flow characteristic information corresponding to the deterministic flow. If there is no local flow table matching the first packet, matching the first packet with the preset flow characteristic information. If the first packet matches any preset flow characteristic information, the gateway can determine that the first packet belongs to the deterministic flow, and then the gateway can create a second flow table for the deterministic flow. It should be noted that if there is no preset flow characteristic information matching the first packet locally, that is, the first packet does not match all local preset flow characteristic information, it indicates that the first packet does not belong to the deterministic flow, and the gateway can forward the first packet to the downstream network device in the second network device according to the forwarding strategy for non-deterministic flow specified in the protocol. For example, the best-effort forwarding strategy can be used to forward the first packet.

It can be understood that the matching field of the second flow table is the preset flow characteristic information matching the first packet, and the action item comprised in the second flow table is to add the matched packet to the scheduling queue corresponding to the second flow table, which is equivalent to that the gateway establishes the relationship between the second flow table and the scheduling queue.

In an example, the preset flow characteristic information can be packet quintuple. Accordingly, the gateway can match the quintuple of the first packet with the quintuple of the preset flow characteristic information.

Alternatively, the preset flow characteristic information can be a flow ID of the deterministic flow to which the packet belongs. Accordingly, the gateway can obtain the flow ID from the header of the first packet, and then match the flow ID in the first packet with the preset flow ID.

The preset flow characteristic information can also be other information used to identify a deterministic flow, and can also distinguish the deterministic flow from the space dimension and time dimension. For example, a packet that the gateway receives from the same entrance and matches the preset packet quintuple belong to the same deterministic flow, or a packet that the gateway receives within the specified duration and matches the preset packet quintuple belong to the same deterministic flow. The preset flow characteristic information in the example of the present disclosure can be any flow characteristic information in related technologies used to distinguish deterministic flows, which is not limited in the example of the present disclosure.

After creating the second flow table for the preset flow characteristic information, the aging duration can be also set for the second flow table. The second flow table has a preset aging duration.

The preset duration can be the duration of a scheduling cycle. In this way, the packets belonging to the same deterministic flow received by the gateway in a scheduling cycle can be cached in the same scheduling queue, so as to prevent the gateway from sending the packets belonging to the same deterministic flow received in one scheduling cycle in two scheduling cycles, which realizes smoothing and shaping.

Similarly, the aging duration of the first flow table is also the duration of one scheduling cycle.

For example, the duration of one scheduling cycle can be 10 microseconds (us), that is, the aging duration of the first flow table and the second flow table can both be 10us.

Or, the preset duration can be set according to actual requirements.

S8024. caching the first packet into the scheduling queue corresponding to the second flow table.

It is understandable that within the duration of a scheduling cycle, if the gateway receives a packet matching the second flow table again, it can continue to cache the packet into the scheduling queue corresponding to the second flow table.

By adopting the method, a flow table can be created for the received deterministic flow based on the preset flow characteristic information, so that within the preset duration, the packets belonging to the same deterministic flow are cached in the same scheduling queue, and the gateway can converge the packets according to the deterministic flow, so as to avoid that the packets belonging to the same deterministic flow received in the same scheduling cycle are converted by the gateway to the scheduling queues of two different scheduling cycles. Further, it can also avoid the packet being dispersed in two different scheduling cycles after being transmitted to another deterministic network, making the packet transmission more in line with the service characteristics and realizing the deterministic transmission in heterogeneous networks.

Based on the same inventive concept, an example of the present disclosure also provides an apparatus for packet transmission applied to a gateway, as shown in Fig. 10. The apparatus comprises:
a receiving module 1001, to receive a first packet from an upstream network device in a first network;
a caching module 1002, to cache the first packet into a scheduling queue of a deterministic flow to which the first packet belongs;
a sending module 1003, to send the packet in the scheduling queue to a downstream network device in a second network according to a scheduling cycle of the scheduling queue.

In an example, the caching module 1002 is specifically to:
match the first packet with a local flow table;
cache, if there is a first flow table matching the first packet locally, the first packet into a scheduling queue corresponding to the first flow table;
create a second flow table based on a preset flow characteristic information if there is no flow table matching the first packet locally and the first packet matches the preset flow characteristic information, wherein the second flow table is used to instruct the gateway to cache a packet matching the preset flow characteristic information into a scheduling queue corresponding to the second flow table;
cache the first packet into the scheduling queue corresponding to the second flow table.

In an example, the first flow table and the second flow table have a preset aging duration.

In an example, the receiving module 1001 is specifically to:
receive the first packet from the upstream network device in the first network through a plurality of entrances.

In an example, the preset flow characteristic information is a packet quintuple; or, the preset flow characteristic information is a flow identification of the deterministic flow to which the packet belongs.

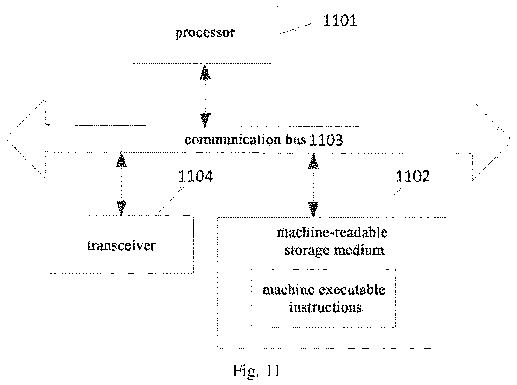

The example of the present disclosure also provides a gateway, as shown in Fig. 11, which comprises:
a processor 1101;
a transceiver 1104;
a machine readable storage medium 1102, which stores machine executable instructions executable by the processor 1101; wherein the machine executable instructions cause the processor 1101 to perform the following operations:
   receiving a first packet from an upstream network device in the first network through the transceiver 1104;
   caching the first packet into a scheduling queue of a deterministic flow to which the first packet belongs;
   sending the packet in the scheduling queue to a downstream network device in a second network through the transceiver 1104 according to a scheduling cycle of the scheduling queue.

In an example, the machine executable instructions further cause the processor 1101 to perform the following operations:
matching the first packet with a local flow table;
caching, if there is a first flow table matching the first packet locally, the first packet into a scheduling queue corresponding to the first flow table;
creating a second flow table based on a preset flow characteristic information if there is no flow table matching the first packet locally and the first packet matches the preset flow characteristic information, wherein the second flow table is used to instruct the gateway to cache a packet matching the preset flow characteristic information into a scheduling queue corresponding to the second flow table;
caching the first packet into the scheduling queue corresponding to the second flow table.

In an example, the first flow table and the second flow table have a preset aging duration.

In an example, the machine executable instructions further cause the processor 1101 to perform the following operations:
receiving the first packet from the upstream network device in the first network through a plurality of entrances through the transceiver 1104.

In an example, the preset flow characteristic information is a packet quintuple; or, the preset flow characteristic information is the flow identification of the deterministic flow to which the packet belongs.

As shown in FIG. 11, the gateway may also comprise a communication bus 1103. The processor 1101, the machine-readable storage medium 1102 and the transceiver 1104 communicate with each other through the communication bus 1103, which can be peripheral component interconnect (PCI) bus or extended industry standard architecture (EISA) bus, etc. The communication bus 1103 may include an address bus, a data bus, a control bus, and the like.

The transceiver 1104 may be a wireless communication module, and the transceiver 1104 performs data interaction with other devices under the control of the processor 1101.

The machine readable storage medium 1102 may include a random access memory (RAM), or may include a non-volatile memory (NVM), for example at least one disk memory. In addition, the machine readable storage medium 1102 may also be at least one storage device located away from the processor described above.

The processor 1101 can be a general-purpose processor, such as a central processing unit (CPU), a network processor (NP), or the like; it can also be a digital signal processor (DSP), an application specific integrated circuit (ASIC), a field-programmable gate array (FPGA) or other programmable logic device, a discrete gate or transistor logic device, a discrete hardware component.

Based on the same invention concept, according to the method for packet transmission provided by above examples of the present disclosure, an example of the present disclosure also provides a machine-readable storage medium, which stores machine executable instructions that can be executed by the processor. The processor is caused by machine executable instructions to implement the blocks of any of the above methods for packet transmission.

In still another example of the present disclosure, there is also provided a computer program product with instructions that, when running on a computer, cause the computer to perform the method for packet transmission described in any one of the examples described above.

It should be noted that the relationship terms herein such as "first", "second", and the like are only used for distinguishing one entity or operation from another entity or operation, but do not necessarily require or imply that there is any actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a" or "include(s) a" do not exclude that there are other identical elements in the processes, methods, articles, or devices which comprise these elements.

The description is only for preferred examples of the present disclosure, and examples are not so limited. Any modifications, substitutions, improvements, etc., which are made within the spirit and principles of the present disclosure, will fall into the protection scope of the present disclosure.

## Claims

1. A method for packet transmission, wherein the method is applied to a gateway and comprises:
receiving a first packet from an upstream network device in a first network;
caching the first packet into a scheduling queue of a deterministic flow to which the first packet belongs;
sending the packet in the scheduling queue to a downstream network device in a second network according to a scheduling cycle of the scheduling queue.

2. The method according to claim 1, wherein caching the first packet into the scheduling queue of the deterministic flow to which the first packet belongs comprises:
matching the first packet with a local flow table;
caching, if there is a first flow table matching the first packet locally, the first packet into a scheduling queue corresponding to the first flow table;
creating a second flow table based on a preset flow characteristic information if there is no flow table matching the first packet locally and the first packet matches the preset flow characteristic information, wherein the second flow table is used to instruct the gateway to cache a packet matching the preset flow characteristic information into a scheduling queue corresponding to the second flow table;
caching the first packet into the scheduling queue corresponding to the second flow table.

3. The method according to claim 2, wherein the first flow table and the second flow table have a preset aging duration.

4. The method according to claim 1, wherein receiving the first packet from the upstream network device in the first network comprises:
receive the first packet from the upstream network device in the first network through a plurality of entrances.

5. The method according to claim 2, wherein the preset flow characteristic information is a packet quintuple; or, the preset flow characteristic information is a flow identification of the deterministic flow to which the packet belongs.

6. An apparatus for packet transmission, wherein the apparatus is applied to a gateway and comprises:
a receiving module, to receive a first packet from an upstream network device in a first network;
a caching module, to cache the first packet into a scheduling queue of a deterministic flow to which the first packet belongs;
a sending module, to send the packet in the scheduling queue to a downstream network device in a second network according to a scheduling cycle of the scheduling queue.

7. The apparatus according to claim 6, wherein the caching module is to:
match the first packet with a local flow table;
cache, if there is a first flow table matching the first packet locally, the first packet into a scheduling queue corresponding to the first flow table;
create a second flow table based on a preset flow characteristic information if there is no flow table matching the first packet locally and the first packet matches the preset flow characteristic information, wherein the second flow table is used to instruct the gateway to cache a packet matching the preset flow characteristic information into a scheduling queue corresponding to the second flow table;
cache the first packet into the scheduling queue corresponding to the second flow table.

8. The apparatus according to claim 7, wherein the first flow table and the second flow table have a preset aging duration.

9. The apparatus according to claim 6, wherein the receiving module is specifically to:
receive the first packet from the upstream network device in the first network through a plurality of entrances.

10. The apparatus according to claim 7, wherein the preset flow characteristic information is a packet quintuple; or, the preset flow characteristic information is a flow identification of the deterministic flow to which the packet belongs.

11. A gateway, wherein the gateway comprises:
a processor;
a transceiver;
a machine readable storage medium, which stores machine executable instructions executable by the processor; wherein the machine executable instructions cause the processor to perform the following operations:
receiving a first packet from an upstream network device in a first network through the transceiver;
caching the first packet into a scheduling queue of a deterministic flow to which the first packet belongs;
sending the packet in the scheduling queue to a downstream network device in a second network through the transceiver according to a scheduling cycle of the scheduling queue.

12. The gateway according to claim 11, wherein the machine executable instructions further cause the processor to perform the following operations:
matching the first packet with a local flow table;
caching, if there is a first flow table matching the first packet locally, the first packet into a scheduling queue corresponding to the first flow table;
creating a second flow table based on a preset flow characteristic information if there is no flow table matching the first packet locally and the first packet matches the preset flow characteristic information, wherein the second flow table is used to instruct the gateway to cache a packet matching the preset flow characteristic information into a scheduling queue corresponding to the second flow table;
caching the first packet into the scheduling queue corresponding to the second flow table.

13. The gateway according to claim 12, wherein the first flow table and the second flow table have a preset aging duration.

14. The gateway according to claim 11, wherein the machine executable instructions further cause the processor to perform the following operations:
receiving the first packet from the upstream network device in the first network through a plurality of entrances through the transceiver.

15. The gateway according to claim 12, wherein the preset flow characteristic information is a packet quintuple; or, the preset flow characteristic information is a flow identification of the deterministic flow to which the packet belongs.

16. A machine-readable storage medium, wherein the machine-readable storage medium stores machine executable instructions, which when called and executed by a processor, cause the processor to perform any of the method of claims 1-5.

17. A computer program product, wherein the computer program product causes a processor to perform any of the method of claims 1-5.
